# EUROPEAN PATENT SPECIFICATION

(11) **EP 0 278 925 B1**
(45) Date of publication and mention of the grant of the patent: **07.04.1993**
(21) Application number: 88830048.0
(22) Date of filing: 10.02.1988
(51) Int. Cl.: A01M 7/00

(54) **Variable geometry and foldable spray boom for spraying chemical products on cultivations**
Faltbares Spritzgestänge mit veränderlicher Geometrie zum Sprühen von Chemikalien auf Kulturen
Rampe de pulvérisation pliable à géométrie variable pour la pulvérisation de produits chimiques sur des cultures

(30) Priority: 13.02.1987 IT 4764287
(43) Date of publication of application: 17.08.1988
(73) Proprietor: SIAPA Società Italo-Americana Prodotti Antiparassitari S.p.A., I-00198 Roma RM (IT)
(72) Inventor: Savi, Dino, I-40018 S. Piero in Casale (Bologna) (IT); Di Vincenzo, Vincenzo, I-00136 Roma RM (IT)
(74) Representative: Bazzichelli, Alfredo

(56) References cited:
- FR-A- 1 068 422
- US-A- 2 995 307
- US-A- 3 055 594
- US-A- 3 472 454

## Description

The present invention refers to a spray unit with a variable geometry and foldable spray boom for spraying chemical products on cultivations.

It is well known that at present, spraying of chemical products on herbaceous and tree cultures, to effect a pesticide or herbicide treatment, is carried out, depending on the type of culture to be treated, by connecting various fittings to a basic unit consisting of an atomizer substantially comprising a tank to contain the product in solution or in an aqueous suspension, at least a blower and a pump for the delivery of the product.

Many kinds of such fittings are known. Very common are, for instance, foldable structures for reducing the overall dimensions, which in various ways support conduits for conveying air and product to atomizers, such structures having different spacial articulations depending on the type of cultivation to be treated.

Among these, straight structures are known which are horizontally extended and support a row of atomizers for the treatment of herbaceous cultures on the field, or structures provided with posts and struts for supporting atomizers in order to treat tree cultures at various heights and inclinations, such as rows of fruit trees or vineyards.

It is to be noted that the atomization of the chemical product, according to the prior art, can be of pneumatic or air type when an air jet breaks the product delivered at low pressure and low speed, or of a mechanical type which is carried out when the product is delivered to the sprayers at a high pressure.

All the known fittings show some disadvantageous features, the most evident of which is a lack of adaptability to treat different types of cultivations, which entails a low utilization and long cost ammortization time.

Moreover the prior art fittings are normally designed for carrying out either one or the other of the two types of air and mechanical atomization exclusively and this is a further limitation of their use.

US-A-2.995.307 describes a mobile spraying apparatus with an arrangement to control the spraying boom on a vehicle.

The movable boom may be adjustable for spraying operations over diverse terrain.

US-A-3.472.454 describes in accordance with the prior art portion of claim 1, a low volume pesticide sprayer system mounted on a ground vehicle.

A fan supplies a stream of air through an enflatable canvas sleeve supported from an elongated boom to a plurality of air outlets.

The spray is pumped through a tubing to the air outlet areas where it is atomized.

An object of the present invention is to provide a spray unit with variable geometry and foldable boom for spraying chemical products on cultivations, having a very high operational flexibility, so as to be able to be used as a removable fitting in an atomizer unit for the treatment of herbaceous cultures on crop fields, as well as any other type of tree culture.

It is within the scope of the present invention to provide a boom which enables the carrying out of both a mechanical and an air atomization.

More particularly, an object of the present invention is a spray unit with a variable geometry and foldable spray boom for spraying chemical products on cultivations, including an atomizer unit
a tank linked to a tractor,
at least one blower and a pump for delivery of the the chemical product,
a chassis supported on said atomizer unit, having two posts;
two half-booms, each mounted independently one from the other on one of said posts, each half-boom comprising a conduit in fluid communication with said blower of the atomizer unit through a flexible coupling,
said conduit being supported by frame members and said frame members being supported by said posts through cable means,
diffuser units in fluid communication with said conduit for the atomisation of said chemical products,
pipe fittings for conveying said chemical products to said diffuser units and
a pipe line in fluid communication with said pipe fittings and the pump output of the atomizer unit,
characterized in that each half-boom further comprises:
- each conduit divided into a plurality of sections in fluid communication with said blower of the atomizer unit,
- flexible couplings connecting said sections of the conduit;
- a plurality of frame members supporting said sections;
- pivot connections provided with blocking means for pivotally securing said frame members of adjacent sections, the pivotal axis of said connections being substantially parallel one to the other;
means for mounting said frame members of a first section of conduit on a post of the chassis, to enable said frame members to be positioned at different heights and to be rotated about the axis of the post, about an axis substantially parallel to the pivotal axis of said pivot connections, and about an axis parallel to the axis of said first section of conduit;
said diffuser units in fluid communication with said sections of conduit and
said pipeline being provided with fittings for a mechanical atomization, so that the spray boom can be selectively used for both an air and a mechanical atomisation.

Further features and advantages of the invention are set out in the dependent claims and will be illustrated in greater detail in a preferred, but not limitative, embodiment in the following description with reference to the accompanying drawings, in which:
figure 1 is a partial perspective view of the spray boom in its arrangement for an air atomization;
figure 2 shows in detail the means for mounting the frame members of the first section of conduit of a half-boom shown in the whole in figure 1, to one of the posts in the chassis;
figure 3 shows in detail a half of a pivotal connection of the frame members in two sections of the conduit; and
figure 4 illustrates in detail an exploded view of the means for blocking a rotation of the frame members of the first section of conduit.

Referring to the drawings, in 1 is illustrated an atomizer unit of a known type comprising a tank 1a, blowers 1b and 1c and a pump 1d for delivering the product to be atomized. The tank is provided with a supporting structure 1e and a stiffening structure 1f, as well as links to a drawing tractor not shown in the figures.

A chassis which can be removably mounted on the structure 1e, comprises a ledge 2 having at its ends telescopically connected pins 2a and 2b for pivotally mounting posts 3 and 4. The distance of the posts 3 and 4 can thus be varied, so as to make the device able to operate on row cultures with various intervals. The posts are fixed in an offset position to enable the overlaying of the two folded half-booms, and they are mounted on rods 3a and 4a respectively, which are pivotally engaged, at their end not shown in the figures, with the stiffening structure of the tank 1a. The rods 3a and 4a are fitted and secured into sleeves 3b, 4b swingably supported on sleeves 3c, 4c which can be removably secured on the posts. To the posts 3 and 4 the two half-booms generally indicated in 5 and 6 are connected as it will be described hereinafter. The half-booms are similar, so that only the one indicated in 5 will be described in detail. Said half-boom comprises a conduit divided into four sections 7, 8, 9, 10 connected one with the other by means of flexible couplings 11, 12, 13, the first of said sections being in communication with the blower 1b of the atomizer unit, through an extendable pipe 14.

The four sections of the conduit are supported by means of substantially similar frame members which are connected by pivotal connections, substantially similar again, with axis of rotation substantially parallel and being provided with blocking means. As an example, section 7 is supported by frame members comprising plates 15 and 16 and pipes 17, 18, 19, 20, whereas section 8 is supported by frame members comprising plates 21, 22, and pipes 23, 24, 25, 26.

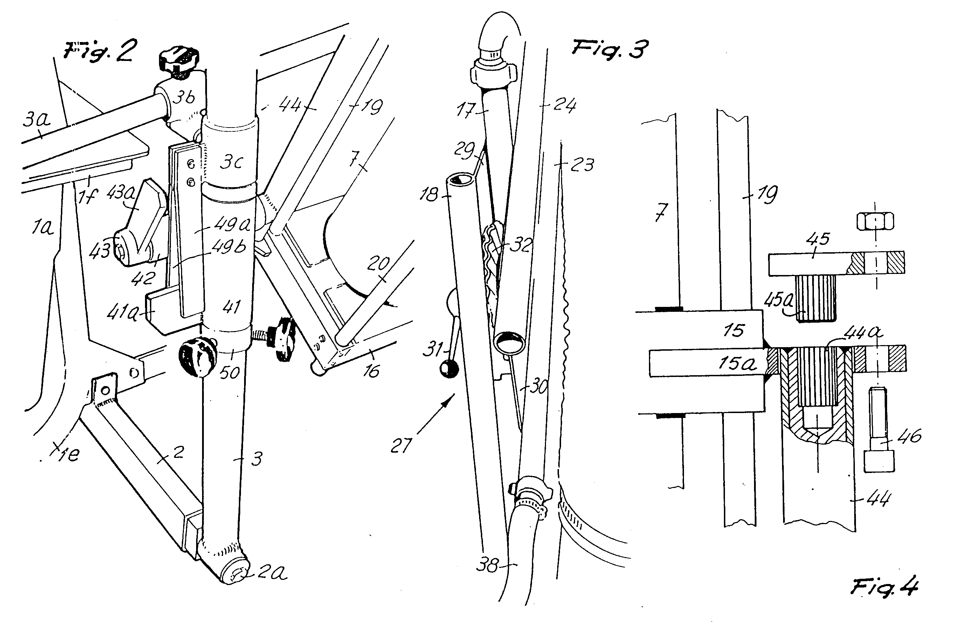

The pivotal connection between said frame members comprises two similar coaxial half-pivots indicated in 27 and 28 respectively, one of which, namely that indicated in 27, is described with reference to figure 3.

Said half-pivot comprises a plate 29 integral with the pipes 17 and 18, and a plate 30 integral with the pipes 23 and 24, said plates being connected by a bolt and nut attachment provided with a crank 31 for hand operation. Said bolt realizes an axis of rotation and supports a pair of Belleville washers not shown in the figure, in contact with the plates 29 and 30 and a toothed washer 32 respectively.

From each of the four sections of the conduit a pair of diffusers are derived, as indicated in 33 and 34 for section 10, which receive the air delivered by the blower 1b and conveyed by said conduit for carrying out the air atomization of the chemical product. The product is fed to the diffusers through fittings, indicated in 33a and 34a for the diffusers 33 and 34 which are derived at nipples 33b and 34b, from a pipeline in communication with the output of the pump 1d of the atomizer unit. Said pipeline comprises the length 35 and is successively formed with pipes in the frame members of the four sections of the conduit, namely the pipes 17, 23, 36, 37 which are connected by means of fittings 38, 39, 40. The nipples 33b and 34b of the fittings to the pipeline of atomizable product are of known type and enable the application of mechanical atomizers. In the case of resorting to these, the operation of blower 1b will be stopped if an atomization with a projected jet is desired, or will be suitably adjusted for an atomization with a balistic jet.

An important feature of the present invention is that the pipeline for the atomizable product is able to convey the product at a high pressure, even when a pneumatic or air atomization is resorted to. In correspondence with the single fittings to the diffusers for the air atomization, the pipeline is provided with calibrated platelets for reduction of said pressure to an optimum range, near the atmospheric pressure. In this way a considerable operation uniformity of the various diffusers will be obtained, by using a plurality of quite similar platelets, thus providing the highest handling comfort, whichever configuration of a half-boom may be assumed, from an horizontal straight one to a vertical straight one.

With particular reference to figures 2 and 4 the means for mounting the half-boom 5 on the post 3 will now be described.

On the post a sleeve 41 is slidingly and rotatingly engaged, on which a support 42 of a first pin 43 is integrally mounted with an axis of rotation substantially parallel to the axis of rotation of the pivotal connections to the frame members of the various sections of the conduit.

On one end of the first pin 43 a second pin 44 is integrally mounted, which realizes an axis of rotation of the frame members of the first section of the conduit, parallel to that of the same section. Said pin 44 in fact is inserted by free engagement into a hole provided in a shelf protruding from the plate 16 and into a hole provided in a shelf 15a protruding from the plate 15, with respect to which it is removably locked by means illustrated in detail in figure 4.

Said means comprise a platelet 45 which can be made removably integral by a bolt 46 with the shelf 15a and consequently with the frame members of the first section of conduit. From the platelet 45 an appendix 45a protrudes, shaped according to a splined male profile able to mate with a splined female profile 44a provided inside the pin 44.

The rotation of the frame members of the first section of conduit about the pin 44, which can be carried out by removing the platelet 45, enables the desired inclination to be given to the diffusers 33 and 44 projecting from said conduit, when the half-boom takes a straight configuration with a horizontal direction, suitable for a treatment on a crop field.

The rotation of the frame members of the first section of the conduit about the pin 43, which enables the half-boom to be positioned in the space according to the operating requirements and tending downwards by action of the weight, is controlled by means of a cable 47 which is wound manually on a winch 48 mounted on the stiffening structure 1f of the tank 1a.

The rotation of the sleeve 41 about the post 3, serving the purpose of enabling oscillations of the half-boom to absorb possible shocks due to an impact with obstacles met on its path, is controlled by bilateral abutment of blade springs 49a, 49b supported on the fixed sleeve 3c against an appendix 41a protruding from said sleeve 41. Said appendix 41a also serves the purpose of stopping the rotation of pin 43 by abutment on the appendix 43a on this pin, when the half-boom takes an horizontal direction.

Sliding of the sleeve 41 on the post 3 for adjusting in height the position of the half-boom 5, is stopped by a metal ring 50 which can be removably made integral with said post.

From the foregoing it can be appreciated that the spray boom according to the invention, also includes the half-boom 6 connected to the blower 1c and supported by a cable 51 which is wound around a winch 52, for which what was described with reference to the half-boom 5 is also true. The product to be atomized is fed to the half-boom 6 through a conduit 53 having branches for feeding the diffusers 54 and 55 supported by a structure 56 removably fixed to the stiffening structure 1e in the space between the posts 3 and 4, said diffusers 54 and 55 being put into operation particularly when treatments on crop fields are carried out.

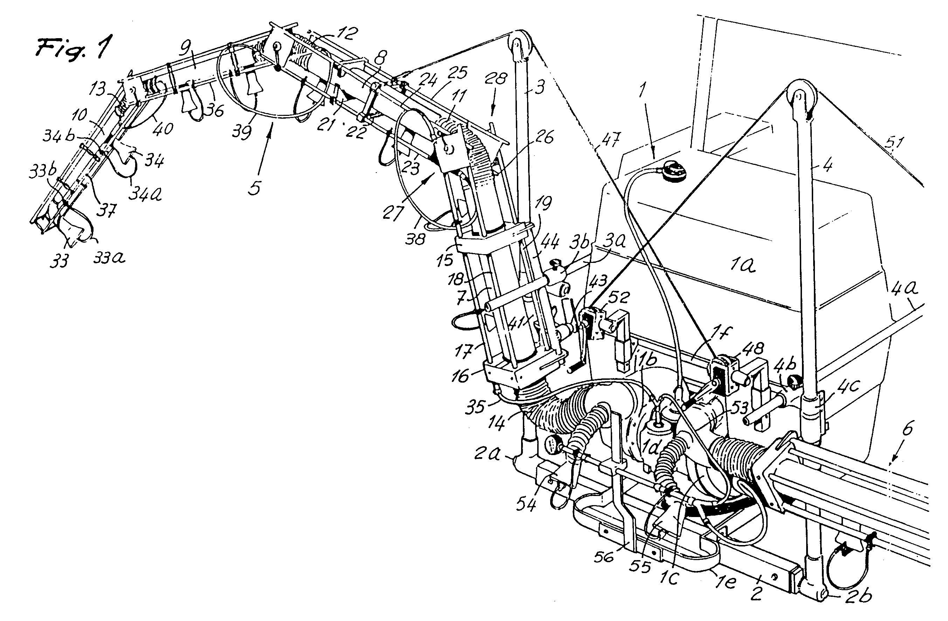

From the foregoing it will be appreciated that the present invention shows a large operational flexibility. In fact it is only sufficient to deal with the pivotal connection of the various sections of the conduits in the two half-booms 5 and 6 and with the mounting means of the half-booms on the posts 3 and 4, to obtain the most varied configurations of the same conduits and to make them suitable for any type of treatment. As an example, with the arrangement illustrated in figure 1 of the half-boom 5 a treatment on row cultures of trees can be carried out from a position overhanging said trees.

Additionally, by arranging the four sections of the conduit aligned and with a horizontal direction, a treatment of any herbaceous culture in the field can be carried out with the possibility of changing the height from the soil. With a vertical direction of the aligned sections a treatment of espalier tree cultures can be carried out.

It is noteworthy to appreciate how easy it is to modify the boom configuration, which, in the illustrated embodiment, is done by simple hand operations which can be carried out by any operator.

A modification of the invention is the possibility of powering the movement of the pivotal connections between the various sections of the conduit in the two half-booms, such as by means of operating cylinders to be controlled preferably in operation by a control panel of the tractor towing the device.

It is to be noted again that the boom according to the invention enables an optimum operation of both a pneumatic and a mechanical atomization.

The above described invention can be embodied with further modifications and variations. As an example the number of sections of the conduit in each half-boom can be different from that described and the connection means of the half-booms with the posts could be different. In a practical realization of the invention, many details could be substituted with other technically equivalent elements and the materials, shapes and sizes as used could be selected according to their particular requirements.

## Claims

1. Spray unit with a variable geometry and foldable spray boom for spraying chemical products on cultivations, including an atomizer unit (1)
a tank (1a) linked to a tractor,
at least one blower (1b, 1c) and a pump (1d) for delivery of the chemical product,
a chassis supported on said atomizer unit (1), having two posts (3, 4);
two half-booms (5, 6), each mounted independently one from the other on a respective one of said posts (3, 4), each half-boom (5, 6) comprising a conduit in fluid communication with said blower (1b, 1c) of the atomizer unit (1) through a flexible coupling,
said conduit being supported by frame members and said frame members being supported by said posts (3, 4) through cable means (47),
diffuser units (33, 34) in fluid communication with said conduit for the atomisation of said chemical products,
pipe fittings (33a, 34a) for conveying said chemical products to said diffuser units (33, 34) and
a pipe line in fluid communication with said pipe fittings (33a, 34a) and the pump output of the atomizer unit (1),
characterized in that each half-boom (5, 6) further comprises:
- each conduit divided into a plurality of sections (7, 8, 9, 10) in fluid communication with said blower (1b, 1c) of the atomizer unit (1),
- flexible couplings (11, 12, 13) connecting said sections (7 to 10) of the conduit;
- a plurality of frame members (17 to 25) supporting said sections (7 to 10);
- pivot connections (27, 28) provided with blocking means for pivotally securing said frame members (17 to 25) of adjacent sections (7, 8, 9, 10), the pivotal axis of said connections (27, 28) being substantially parallel one to the other;
means (41, 42, 43) for mounting said frame members (17 to 25) of a first section (7) of conduit on a post (3) of the chassis, to enable said frame members (17 to 25) to be positioned at different heights and to be rotated about the axis of the post (3), about an axis substantially parallel to the pivotal axis of said pivot connections (27, 28), and about an axis parallel to the axis of said first section (7) of conduit;
said diffuser units (33, 34) in fluid communication with said sections (7, 8, 9, 10) of conduit and
said pipeline (35, 17, 28, 23, 39, 36, 40) being provided with fittings for a mechanical atomization, so that the spray boom can be selectively used for both an air and a mechanical atomisation.

2. Spray unit according to claim 1, in which said chassis linked to the atomizer unit comprises a ledge (2) removably secured to a metal structure (1e) linked to said unit, pins (2a, 2b) telescopically engaged with the ends of said ledge for a pivotal mounting of said posts (3, 4) on said ledge, said posts (3, 4) having, integral therewith, sleeves (3b, 4b), and rods (3a, 4a) slidingly engaged into said sleeves (3b, 4b) and pivotally secured to said tank of the atomizer unit, so that said posts (3, 4) can be locked in a desired position by locking the position of said rods into said sleeves.

3. Spray unit according to claims 1 or 2, in which the number of sections of conduit in each half-boom, is four.

4. Spray unit according to any of the preceding claims, in which said pivotal connections (27, 28) of said frame members in each section of conduit, comprise a pair of coaxial half-pivots (27, 28) each including a pair of plates (29, 30) integral with the frame members (23, 24) to be connected respectively, a bolt realizing said axis of rotation, engaging said plates, a pair of Belleville washers supported on said bolts between said plates, and a toothed washer (32) in contact with said Belleville washers.

5. Spray unit according to any of the preceding claims, in which said means for mounting the frame members of the first section (7) of the conduit on one of the posts (3) of the chassis, comprise a sleeve (41) slidingly and rotatingly engaged with said post (3), a support (42) integral with said sleeve (41) for a first pin (43) having an axis substantially parallel to the axis of rotation of said pivotal connections (27, 28) between the various sections of conduit, a second pin (44) integral with one end of said first pin (43), which realizes an axis of rotation of said frame members of the first section (7) of the conduit, which is parallel to that of said section, said second pin (44) being provided with means for locking said rotation, a metal ring (50) for abut stopping the stroke of said sleeve (41) along said post, and spring blades (49a, 49b) controlling the rotation of the sleeve (41) about said post (3) by means of a bilateral abutment against an appendix (41a) of said sleeve (41).

6. Spray unit according to claim 5, in which said blocking means for locking a rotation in the first section (7) of conduit about said pin (44) with axis parallel to that of said first section, comprise a platelet (45) removably integral with said frame members and provided with an appendix (45a) shaped according to a male splined profile mating with a female splined profile (44a) provided inside said pin (44).

7. Spray unit according to any of the preceding claims, in which each half-boom (5, 6) comprises a winch (48, 52) for winding a cable (47, 51) secured to the respective half-boom, so that the position of the half-boom can be adjusted and a rotation thereof downwards due to its own weight can be hindered.

8. Spray unit according to any of the preceding claims, in which each of the two half-booms (5, 6) has the first section of conduit connected to a blower (1b) of the atomizer unit (1), through an extendable pipe (14).

9. Spray unit according to any of the preceding claims, comprising at least a pulverizer supported on a structure linked to the atomizer unit (1) placed in the space between said posts supporting said two half-booms.

10. Spray unit according to any of the preceding claims, in which said pipeline for the product, which is connected to the pump output (1d) in the atomizer unit (1), is able to feed the product at a high pressure and is provided, in correspondence with each fitting to the diffusers (33, 34, 36) for the air atomization, with calibrated platelets for reducing said pressure to an optimum value for this type of atomization.

11. Spray unit according to any of the preceding claims, in which said pipeline for conveying the atomizable product is formed with pipes (17, 23, 36, 37) being part of the frame members of the various sections of the conduit, and being connected by fittings (38, 39, 40).

## Patentansprüche

1. Spritzgerät mit einer veränderlichen Geometrie und faltbarem Spritzgestänge zum Sprühen von chemischen Erzeugnissen auf Kulturen, das enthält:
eine Zerstäubungseinheit (1),
einen an einen Traktor angeschlossenen Tank (1a),
wenigstens ein Gebläse (1b, 1c) und eine Pumpe (1d) zur Zuführung des chemischen Erzeugnisses,
ein von der Zerstäubungseinheit (1) getragenes Gestell, das zwei Ständer (3, 4) hat;
zwei Halb-Ausleger (5, 6) die jeweils unabhängig voneinander an einem entsprechenden der Ständer (3, 4) angebracht sind, wobei jeder Halbausleger (5, 6) eine Leitung umfaßt, die über eine flexible Kupplung mit dem Gebläse (1b, 1c) der Zerstäubungseinheit (1) in Fluidverbindung steht,
wobei die Leitung von Rahmenelementen getragen wird, und die Rahmenelemente über eine Kabeleinrichtung (47) von den Ständern (3, 4) getragen werden,
Zerstäuberdüseneinheiten (33, 34), die mit der Leitung in Fluidverbindung stehen und die chemischen Erzeugnisse zerstäuben,
Rohrverbindungsstücke (33a, 34a) zur Leitung der chemischen Erzeugnisse zu den Zerstäuberdüseneinheiten (33, 34) und
eine Rohrleitung, die mit den Rohrverbindungsstücken (33a , 34a) und dem Pumpenausgang der Zerstäubungseinheit (1) in Fluidverbindung steht,
dadurch gekennzeichnet, daß jeder Halbausleger (5, 6) weiterhin umfaßt:
- jede Leitung, die in eine Vielzahl von Abschnitten (7, 8, 9, 10) unterteilt ist, die mit dem Gebläse (1b, 1c) der Zerstäubungseinheit (1) in Fluidverbindung steht,
- flexible Verbindungen (11, 12, 13), die die Abschnitte (7 bis 10) der Leitung verbinden;
- eine Vielzahl von Rahmenelementen (17 bis 25), die die Abschnitte (7 bis 10) tragen;
- Schwenkverbindungen (27, 28), die mit Arretiereinrichtungen versehen sind, um die Rahmenelemente (17 bis 25) aneinandergrenzender Abschnitte (7, 8, 9, 10) schwenkbar zu befestigen, wobei die Schwenkachsen der Verbindungen (27, 28) im wesentlichen parallel zueinander liegen;
- Einrichtungen (41, 42, 43) zum Anbringen der Rahmenelemente (17 bis 25) eines ersten Leitungsabschnittes (7) an einem Ständer (3) des Gestells, um zu ermöglichen, daß die Rahmenelemente (17 bis 25) in verschiedenen Hohen in Stellung gebracht und um die Achse des Ständers (3) gedreht werden können, um eine Achse, die im wesentlichen parallel zur Schwenkachse der Schwenkverbindungen (27, 28) liegt, und um eine Achse, die parallel zur Achse des ersten Leitungsabschnittes (7) liegt;
- die Zerstäuberdüseneinheiten (33, 34), die mit den Leitungsabschnitten (7, 8, 9, 10) in Fluidverbindung stehen und
- die Rohrleitung (35, 17, 28, 23, 39, 36, 40), die mit Armaturen zur mechanischen Zerstäubung versehen ist, so daß das Spritzgestänge wahlweise sowohl zur Luft- als auch zu mechanischen Zerstäubung eingesetzt werden kann.

2. Spritzgerät nach Anspruch 1, wobei das mit der Zerstäubungseinheit verbundene Gestell einen Träger (2) umfaßt, der lösbar an einer Metallkonstruktion (1e) angebracht ist, die mit der Einheit verbunden ist, sowie Zapfen (2a, 2b), die teleskopartig mit den Enden des Trägers im Eingriff sind, um die Ständer (3, 4) schwenkbar an dem Träger anzubringen, wobei mit den Ständern (3, 4) Muffen (3b, 4b) zusammenhängen und Stangen (3a, 4a), die verschiebbar mit den Muffen (3b, 4b) im Eingriff und drehbar an dem Tank der Zerstäubungseinheit angebracht sind, so daß die Ständer (3, 4) in einer gewünschten Stellung arretiert werden können, indem die Stellung der Stangen in den Muffen arretiert wird.

3. Spritzgerät nach Anspruch 1 oder 2, wobei die Anzahl der Leitungsabschnitte bei jedem Halbausleger vier beträgt.

4. Spritzgerät nach einem der vorangehenden Ansprüche, wobei die Schwenkverindungen (27, 28) der Rahmenelemente in jedem Leitungsabschnitt ein Paar koaxialer Halb-Drehgelenke (27, 28) umfassen, die jeweils ein Paar Platten (29, 30) enthalten, die mit den jeweils zu verbindenden Rahmenelementen (23, 24) zusammenhängen, sowie einen die Drehachse bildenden Bolzen, der mit den Platten im Eingriff ist, ein Paar Belleville-Ringe, die von den Bolzen zwischen den Platten gehalten werden und eine Zahnscheibe (32) sich mit den Belleville-Scheiben in Kontakt befindet.

5. Spritzgerät nach einem der vorangehenden Ansprüche, wobei die Einrichtung zur Anbringung der Rahmenelemente des ersten Leitungsabschnittes (7) an einem der Ständer (3) des Gestells eine Muffe (41) umfaßt, die verschiebbar und drehbar mit dem Ständer (3) im Eingriff ist, sowie einen mit der Muffe (41) zusammenhängenden Halter (42) für einen ersten Zapfen (43), dessen Achse im wesentlichen parallel zur Drehachse der Schwenkverbindungen (27, 28) zwischen den verschiedenen Leitungsabschnitten ist, einen zweiten, mit dem einen Ende des ersten Zapfens (43) zusammenhängenden Zapfen (44), der eine Drehachse der Rahmenelemente des ersten Leitungsabschnittes (7) bildet, die parallel zu der des Abschnittes liegt, wobei der zweite Zapfen (44) mit einer Einrichtung zur Arretierung der Drehbewegung versehen ist, einen Metallring (50) zur Anschlagsarretierung des Hubes der Muffe (41) an dem Ständer und Federblätter (49a, 49b), die die Drehung der Muffe (41) um den Ständer (3) durch zweiseitigen Anschlag an einem Ansatz (41a) der Muffe (41) begrenzen.

6. Spritzgerät nach Anspruch 5, wobei die Arretierungseinrichtung zum Arretieren einer Drehung im ersten Leitungsabschnitt (7) um den Zapfen (44), dessen Achse parallel zur der des ersten Abschnitts ist, ein Plättchen (45) umfaßt, das lösbar mit den Rahmenelementen zusammenhängt und mit einem Ansatz (45a) versehen ist, der einem Außen-Keilwellenprofil entsprechend geformt ist, das in ein Innen-Keilwellenprofil (44a), das in dem Zapfen (44) vorhanden ist, eingreift.

7. Spritzgerät nach einem der vorangehenden Ansprüche, wobei jeder der Halbausleger (5, 6) eine Winde (48, 52) zum Aufwickeln eines Kabels (47, 51) umfaßt, das am entsprechenden Halbausleger angebracht ist, so daß die Stellung des Halbauslegers eingestellt werden kann und eine Drehung desselben nach unten aufgrund seiner Eigenmasse verhindert werden kann.

8. Spritzgerät nach einem der vorangehenden Ansprüche, wobei der erste Leitungsabschnitt jedes der beiden Halbausleger (5, 6) über ein dehnbares Rohr (14) mit einem Gebläse (1b) der Zerstäubungseinheit (1) verbunden ist.

9. Spritzgerät nach einem der vorangehenden Ansprüche, das wenigstens einen Zerstäuber umfaßt, der von einer mit der Zerstäubungseinheit (1) verbundenen Konstruktion getragen wird, die in dem Zwischenraum zwischen den die beiden Halbauslegern tragenden Ständern angeordnet ist.

10. Spritzgerät nach einem der vorangehenden Ansprüche, wobei die Rohrleitung für das Erzeugnis, die mit dem Pumpenausgang (1d) in der Zerstäubungseinheit (1) verbunden ist, das Erzeugnis mit hohem Druck einspeisen kann und entsprechend jeder Verbindung mit den Zerstäuberdüsen (33, 34, 36) zur Luftzerstäubung mit Meßplättchen versehen ist, um den Druck auf einen für diese Art der Zerstäubung optimalen Wert zu verringern.

11. Spritzgerät nach einem der vorangehenden Ansprüche, wobei die Rohrleitung zur Übertragung des zerstäubbaren Erzeugnisses aus Rohren (17, 23, 36, 37) geformt ist, die Teil der Rahmenelemente der verschiedenen Leitungsabschnitte sind und durch Rohrverbindungsstücke (38, 39, 40) verbunden sind.

## Revendications

1. Unité de pulvérisation à géométrie variable et pliable destinée à pulvériser des produits chimiques sur des cultures, comprenant un atomiseur (1)
un réservoir (1a) raccordé à un tracteur,
au moins une soufflante (1b, 1c) et une pompe (1d) pour la distribution du produit chimique,
un châssis monté sur l'unité d'atomiseur (1) comportant deux montants (3, 4) ;
deux demi-rampes (5, 6) chacune montée indépendamment l'une de l'autre sur l'un des montants respectifs (3, 4), chaque demi-rampe comprenant une conduite en communication de fluide avec la soufflante (1b, 1c) de l'unité d'atomiseur (1) par l'intermédiaire d'un raccord souple,
la conduite étant supportée par des éléments d'ossature et les éléments d'ossature étant montés sur les montants (3, 4) par l'intermédiaire de câbles (47),
des unités de diffuseur (33, 34) en communication de fluide avec la conduite pour l'atomisation des produits chimiques,
des accessoires de tuyaux (33a, 34a) destinés à l'acheminement des produits chimiques vers les unités de diffuseur (33, 34) et
une canalisation en communication de fluide avec les accessoires de tuyaux (33a, 34a) et la sortie de pompe de l'unité d'atomiseur (1),
caractérisée en ce que chaque demi-rampe (5, 6) comprend de plus :
- chaque conduite divisée en plusieurs sections (7, 8, 9, 10) en communication de fluide avec la soufflante (1b, 1c) de l'unité d'atomiseur (1),
- des raccords souples (11, 12, 13) reliant les sections (7 à 10) de la conduite ;
- une pluralité d'éléments d'ossature (17 à 25) supportant les sections (7 à 10) ;
- des raccords de pivotement (27, 28) munis de moyens de blocage pour la fixation de façon pivotante des éléments d'ossature (17 à 25) de section contiguë (7, 8, 9, 10), l'axe pivotant des raccords (27, 28) étant sensiblement parallèle entre eux ;
des moyens (41, 42, 43) destinés au montage de ces éléments d'ossature (17 à 25) d'une première section (7) de conduite sur un montant (3) du châssis, pour permettre de positionner les éléments d'ossature (17 à 25) à différentes hauteurs et de les mettre en rotation autour de l'axe du montant (3), sur un axe sensiblement parallèle à l'axe de pivotement des raccords pivotants (27, 28) et sur un axe parallèle à l'axe de la première section (7) de la conduite;
les unités de diffuseur (33, 34) en communication de fluide avec les sections (7, 8, 9, 10) de la conduite et
la canalisation (35, 17, 28, 23, 39, 36, 40) étant munie d'accessoires pour l'atomisation mécanique de sorte que la rampe de pulvérisation peut être utilisée sélectivement à la fois pour une atomisation par air et une atomisation mécanique.

2. Unité de pulvérisation selon la revendication 1, dans laquelle le chàssis raccordé à l'unité d'atomiseur comprend un rebord (2) fixé de façon amovible sur une structure métallique (1e) raccordée à l'unité, des goupilles (2a, 2b) engagées télescopiquement dans les extrémités du rebord pour le montage pivotant des montants (3, 4) sur le rebord, les montants (3, 4) comportant solidairement des manchons (3b, 4b) et des tiges (3a, 4a) s'engageant de façon coulissante dans les manchons (3b, 4b) et fixé de façon pivotante sur le réservoir de l'unité d'atomiseur de sorte que les montants (3, 4) peuvent être bloqués dans la position souhaitée par blocage de la position des tiges dans les manchons.

3. Unité de pulvérisation selon les revendications 1 ou 2, dans laquelle le nombre de sections de conduite dans chaque demi-rampe est égal à quatre.

4. Unité de pulvérisation selon l'une quelconque des revendications précédentes, dans laquelle les raccords pivotants (27, 28) des éléments d'ossature dans chaque section de conduite comprennent une paire de demi-pivots coaxiaux (27, 28) incorporant chacun une paire de plaques (29, 30) solidaires des éléments d'ossature (23, 24) à raccorder respectivement, un boulon servant d'axe de rotation, coopé. rant avec les plaques, une paire de rondelles Belleville montée sur les boulons entre les plaques, et une rondelle dentelée (32) en contact avec les rondelles Belleville.

5. Unité de pulvérisation selon l'une quelconque des revendications précédentes, dans laquelle les moyens destinés au montage des éléments d'ossature de la première section (7) de la conduite sur l'un des montants (3) du châssis, comprennent un manchon (41) s'engageant de façon coulissante et rotative dans le montant (3), un support (42) solidaire du manchon (41) pour une première goupille (43) ayant un axe sensiblement parallèle à l'axe de rotation des raccords pivotants (27, 28) entre les différentes sections de conduite, une seconde goupille (44) solidaire d'une extrémité de la première goupille (43) qui sert d'axe de rotation des premiers éléments d'ossature de la première section (7) de la conduite, qui est parallèle à celui de la section, la seconde goupille (44) étant munie de moyens pour bloquer la rotation, une bague métallique (50) pour la venue en butée de la course du manchon (41) le long du montant, et des lames de ressort (49a, 49b) commandant la rotation du manchon (41) autour du montant (3) au moyen d'une butée bilatérale contre un appendice (41a) du manchon (41).

6. Unité de pulvérisation selon la revendication 5, dans laquelle les moyens de blocage destinés à verrouiller la rotation dans la première section (7) de la conduite autour de la goupille (44) avec l'axe parallèle à l'axe de la première section, comprennent une plaquette (45) fixée de façon amovible sur les éléments d'ossature et munie d'un appendice (45a) formant un profil cannelé mâle s'engageant dans un profil cannelé femelle (44a) prévu à l'intérieur de la goupille (44).

7. Unité de pulvérisation selon l'une quelconque des revendications précédentes, dans laquelle chaque demi-rampe (5, 6) comprend un treuil (48, 52) destiné à enrouler un câble (47, 51) fixé sur la demi-rampe respective permettant d'ajuster la position de la demi-rampe et d'empêcher sa rotation vers le bas par son propre poids.

8. Unité de pulvérisation selon l'une quelconque des revendications précédentes, dans laquelle chacune des demirampes (5, 6) comporte la première section de conduite raccordée à une soufflante (1b) de l'unité d'atomiseur (1) par une conduite expansible (14).

9. Unité de pulvérisation selon l'une quelconque des revendications précédentes, comprenant au moins un pulvérisateur monté sur une structure raccordée à l'unité d'atomiseur (1) positionnée dans l'espace entre les montants supportant les deux demi-rampes.

10. Unité de pulvérisation selon l'une quelconque des revendications précédentes, dans laquelle la canalisation pour le produit chimique qui est raccordé à la sortie de pompe (1d) dans l'unité d'atomiseur (1) peut alimenter le produit à pression élevée et elle est munie, en correspondance avec chaque accessoire des diffuseurs (33, 34, 36) pour l'atomisation d'air, de plaquettes étalonnées permettant de réduire la pression à une valeur optimale pour ce type d'atomisation.

11. Unité de pulvérisation selon l'une quelconque des revendications précédentes, dans laquelle la canalisation destinée à acheminer le produit atomisable est constituée de tuyaux (17, 23, 36, 37) faisant partie des éléments d'ossature des différentes sections de la conduite et étant raccordés par des accessoires (38, 39, 40).
